# EUROPEAN PATENT SPECIFICATION

(11) **EP 0 718 489 B1**
(45) Date of publication and mention of the grant of the patent: **03.03.1999**
(21) Application number: 95308852.3
(22) Date of filing: 06.12.1995
(51) Int. Cl.: F02M 43/04, F02M 43/00

(54) **Injection arrangement for an internal combustion engine**
Einspritzeinrichtung für eine Brennkraftmaschine
Dispositif d'injection pour un moteur à combustion interne

(30) Priority: 23.12.1994 FI 946051
(43) Date of publication of application: 26.06.1996
(73) Proprietor: Wärtsilä NSD OY AB, 00530 Helsinki (FI)
(72) Inventor: Hellén, Göran, FIN-65280 Vaasa (FI); Jay, Dave, FIN-66500 Vähäkyrö (FI)
(74) Representative: Newby, Martin John

(56) References cited:
- EP-A- 0 610 585
- DE-A- 3 540 780
- US-A- 4 856 713
- PATENT ABSTRACTS OF JAPAN vol. 18 no. 76 (M-1556) ,8 February 1994 & JP-A-05 288129 (MITSUBISHI) 2 November 1993,

## Description

This invention relates to an injection arrangement for an internal combustion engine, especially a diesel engine, the internal combustion engine being of the kind according to the preamble of claim 1. The invention relates also to a method making use of such an injection arrangement.

In the operation of diesel engine cylinders, nitrogen oxides (NOx), which are created under high temperatures, are passed, together with exhaust gases from the engine, into the open air. Because of the negative environmental effects of these nitrogen oxide emissions there has been much endeavour to minimize them. In practice this is achieved either by influencing the combustion of fuel in the engine itself or by depurating the exhaust gases.

Known methods relating to engine technique for reducing the generation of nitrogen oxides are based on attempts to minimize the creation of nitrogen oxides or attempts to reduce the nitrogen oxides in the combustion chambers of the engine cylinders. Such known methods include shifting the advance for the injection of fuel and injecting an additional medium directly into the cylinder. Such known techniques typically enable nitrogen oxide emissions to be decreased by from 10-70%. From the viewpoint of investment in equipment, methods relating to engine technique are considered to be advantageous.

Known internal methods for reducing the generation of nitrogen oxides in engines are based on the combustion process and/or the products thereof. In particular a medium, in addition to the actual fuel, is fed into the cylinder and reacts with and/or cools the mixture in the cylinder. This chemical reaction and/or cooling enables the content of nitrogen oxides (NOx) in the exhaust gases from the process to be decreased.

The additional medium to be fed into the cylinder can, for example, be a reducing medium, such as ammonium or urea. A liquid, in particular water, may with advantage be mixed with the additional medium to form a solution therewith so that an even distribution of the reducing medium and the drops of the liquid is accomplished so that the chemical reduction process of the nitrogen oxides created in the combustion chamber of the cylinder is made more effective. The additional medium can, instead of being a reducing medium, be water which has the effect of cooling the combustion mixture thereby decreasing its nitrogen oxide content.

DE-A-3540780 discloses a known injection unit for injecting two media into an engine cylinder. However in this known unit, both the injected media are fuels (a pilot fuel and a main fuel) and the feeding and control of the injections are mutually dependent and take place sequentially.

The aim of the present invention is to provide an improved injection arrangement, and a method which makes use of such an injection arrangement, especially for diesel engines, which injection arrangement has an uncomplicated construction, is secure in operation and provides good possibilities for controlling the precise moment of injection and the duration thereof so that any changes can be made according to need for decreasing the content of different nitrogen oxides, created in the combustion process, from the exhaust gases.

The aims of the invention can be met according to one aspect of the invention, in an injection arrangement as set forth in the ensuing claim 1.

By keeping the circuit for the additional medium continuously connected directly with the feed chamber of the second valve, an uncomplicated construction in the actual valve body and an advantageous operation of the second valve is obtained. Injection of the additional medium can be accomplished precisely and flexibly according to need, because it is dependent on an electric control signal.

The control valve is, with advantage, a solenoid valve, which receives the electric signal from an electronic control unit dependent on the operation of the engine and being pre-programmed in advance, preferably so that the start and the duration of a feeding period occur by taking account of the load and the speed of rotation of the engine in each case. Thus possible changes for minimizing the content of nitrogen oxides according to the situation can be taken account of precisely and flexibly.

In practice the solenoid valve can be arranged to control feeding of a hydraulic fluid into a second chamber, limited in part by a second piston surface of the valve member, and which acts to urge the valve member towards its open position.

A circuit for the hydraulic fluid may include a branch provided with a separate feeding pump and connected to a sealing chamber which is limited to a mantle surface of the valve member located between the said two piston surfaces. Thus in addition to controlling the control valve, the same hydraulic fluid can be used to seal the valve member, and notwithstanding, different pressures can be used in the different branches so that the sealing pressure exceeds the pressures prevailing in both the pressure medium chambers.

A feed circuit for the additional medium includes flow control means arranged to detect changes in the flow pressure. As a result thereof, the flow of the additional medium can be controlled, for instance to cut off feeding of the additional medium into the feed chamber, in case the feeding into the engine cylinder exceeds the set time limits. This can occur, for example, if the valve member does not fully close, e.g. if it is jammed.

The even distribution of the additional medium into the engine cylinder is improved if injection nozzle orifices for the first and second valves are mutually arranged at different levels. In addition both the valves can be arranged within the same valve body, which provides a compact and strong construction.

According to another aspect of the present invention there is provided a method making use of the injection arrangement according to said one aspect, the method being as claimed in the ensuing claim 8. Thus, feeding of the additional medium occurs continuously and partly simultaneously with the feeding of the fuel.

If the additional medium is water, the feeding thereof is started before the commencement of the feeding of fuel and is stopped after feeding of the fuel has started. Correspondingly, if the additional medium is ammonium, urea or a water solution of these, the feeding thereof is started after the commencement of the feeding of fuel, preferably after ignition of the actual fuel, and the feeding thereof is stopped only after feeding of the fuel has stopped.

Utilization of the injection arrangement in a manner according to the invention is based on an experimentally perceived phenomenon that, when it is attempted to merely minimize the contents of nitrogen oxides by utilizing different ways of feeding, the rate of fuel consumption can, in certain phases, increase substantially. In the method according to the invention, however, the nitrogen oxides created in the combustion process can be decreased effectively and at the same time the fuel consumption can be kept reasonable.

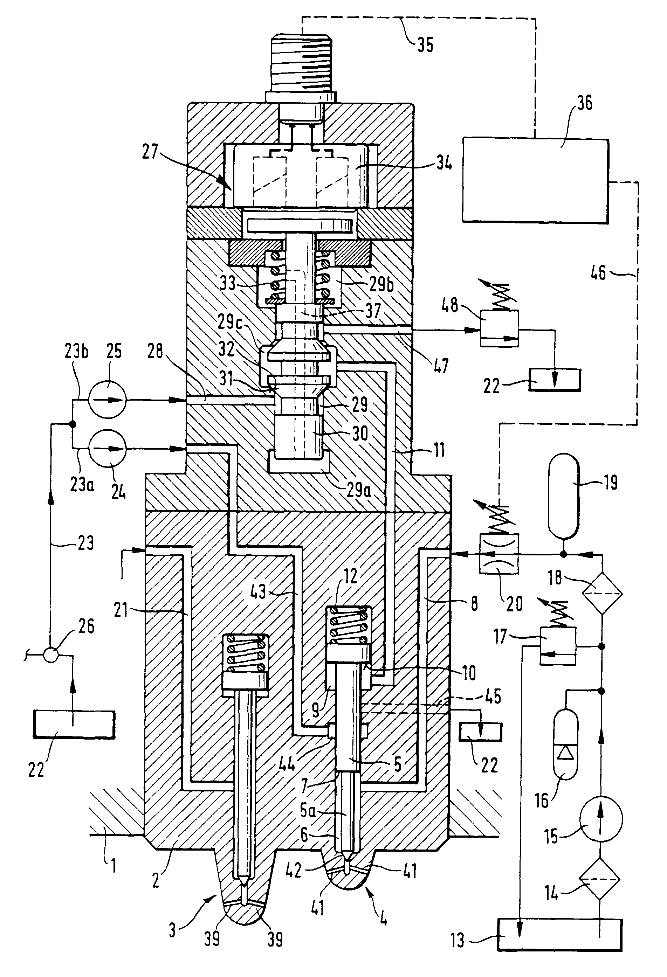

An embodiment of the invention will now be described, by way of example only, with particular reference to the accompanying drawing, the sole figure of which shows schematically an embodiment of an injection arrangement according to the invention.

In the drawing reference number 1 designates a cylinder head of an internal combustion engine which limits a combustion chamber of a cylinder (not shown) and which supports a valve body 2. The valve body 2 includes a valve 3 for controlling the injection of fuel into the combustion chamber and a valve 4 for controlling the injection of additional medium, for example water, into the combustion chamber. The valve 3 is connected by a passage 21 to an injection pump (not shown), which feeds fuel to be injected through the valve 3 and nozzle orifices 39 into the combustion chamber in a manner known per se and will not be described in any more detail herein.

The valve 4 to be used for feeding the additional medium into the combustion chamber includes a valve member 5 having a needle part 5a, which actually controls feeding of the additional medium through nozzle orifices 41 into the combustion chamber of the engine cylinder. The needle part 5a extends into a feed chamber 6 for the additional medium, which is limited at its upper end (as shown) by a stepped surface of the valve member 5 which serves as an annular piston surface 7. The additional medium is fed into the chamber 6 under pressure through a passage 8. The valve member 5 also includes a second piston surface 10 of stepped annular form which limits in part a second pressure medium chamber 9. Hydraulic fluid is fed into the second chamber 9 through a passage 11, as will be described below. A spring 12 urges the valve member 5 into a closed position in which the tip of the needle part 5a is pressed against a seating surface 42 of the valve body 2 to close the valve 4.

A circuit for feeding the additional medium to the feed chamber 6 includes a container 13 from which a pump 15 pumps the additional medium through filters 14 and 18 and into the passage 8. The circuit also includes damper means 16, known as such and for decreasing pressure fluctuations, pressure adjusting means 17 and a pressure accumulator 19, which ensures that the pressure does not fall by too much during the feeding process.

The additional medium feeding circuit also includes a so-called flow-fuse 20 which detects changes in the flow pressure and controls the flow as required. For example, if the feeding of the additional medium into the cylinder through the valve 4 exceeds set time limits, for instance 10 ms, the flow-fuse 20 can be arranged to cut off the feeding by means of a control signal 46 as will be described below. A reason for a valve to remain open in this way can, for instance, be jamming of the valve member so that the valve does not close properly. On the other hand when the injection starts, the pressure tends to fall, whereby the flow-fuse 20 can be arranged to provide a pressure pulse to prevent the pressure from falling, e.g. more than 30 bar, from the desired injection pressure.

In practice the operation of the flow-fuse 20 can with advantage be based on a piston member, through which the additional medium flow is led and which is pressed against the force of a spring by the flow. The flow-fuse can be provided with a sensor, which detects movements resulting from changes in the flow and, in accordance therewith, provides the above-mentioned control signal 46 when needed.

The hydraulic fluid can with advantage be engine oil, which is pumped from an oil container 22 in the engine, through a branch 26, and along a pipe 23 which branches into a sealing fluid branch 23a and a control fluid branch 23b provided with pumps 24 and 25, respectively. When required, the feed circuit for the hydraulic fluid can also be provided, for example, with pressure adjusting means and damper means as is the case with the feed circuit for the additional medium. The hydraulic fluid from the sealing fluid branch 23a is fed via a passage 43 into an annular sealing groove 44 which surrounds a cylindrical portion of the valve member 5. Excess fluid is recovered through a drain passage 45 and is led, via a filter (not shown), back into the container 22. The pressure of the hydraulic fluid is selected so that it slightly exceeds the pressure of the additional medium in the chamber 6 and thus prevents the different pressure mediums in the chambers 6 and 9 from being mixed with each other. If for instance the pressure of the additional medium in the chamber 6 is about 400 bar, the pressure of the hydraulic fluid can with advantage typically be about 430 bar.

The control fluid branch 23b is connected through a passage 28 with a chamber 29 in the valve body 2. The chamber 29 is part of a control valve 27 which has a valve member 30 movable against the force of a spring 33. The chamber 29 includes extension parts 29a, 29b and 29c, the parts 29a and 29b being in connection with each other through a passage 37 and the part 29c being in connection with the pressure medium chamber 9 via the passage 11. Normally the spring 33 acts to press a valve surface 31 of the valve member 30 against a seating surface 32 of the valve body 2 and thereby prevents feeding of hydraulic fluid from the passage 28 through the chambers 29 and 29c into the passage 11. Control of the valve member 30 is carried out by means of a solenoid arrangement 34 included in the control valve 27 and receiving a control signal 35 from an electronic control unit 36. The control unit 36 can be preprogrammed in a manner known as such to provide timely control signals in accordance with the operation cycle of the engine, for instance on the basis of signals from a detector following the rotation of the cam shaft of the engine. In addition changes in the load and in the speed of rotation of the engine can be taken account of in the programming and thus the timing of a feeding period and the duration thereof can be altered as required. The control unit 36 may also be programmed so that when the engine is idling it provides no control signal 35 at all, whereby no additional medium is injected into the engine cylinder. In a corresponding way the control unit may be programmed to cut off the injection when required on the basis of the sensor signal 46 from the flow fuse 20 as described above.

Any excess hydraulic fluid fed through the control fluid branch 23b is led back into the container 22 through a passage 47 and pressure adjusting means 48. A part of this hydraulic fluid, however, can also be recovered through the drain passage 45.

The operation of the feed valve 4 for the additional medium is as follows. Normally, prior to feeding, the pump 15 continuously feeds additional medium through the passage 8 into the chamber 6 so that the pressure in the chamber 6 is typically about 400 bar. The force of the spring 12 is selected so that when the control valve 27 is in its closed position the pressure in the chamber 6, together with the pressure of the hydraulic fluid in the chamber 9, is not sufficient to open the valve against the closing spring force. Under the influence of the control signal 35 from the electronic control unit 36, the solenoid arrangement 34 causes the valve member 30 of the control valve 27 to move upwards (as shown in the drawing) against the force of the spring 33 so that the connection of the passage 28 through the chamber 29 and its extension 29c to the passage 11 is opened. Then the pressure of the hydraulic fluid to be fed, which may be for instance 300 bar, is applied to the piston surface 10 in the chamber 9, as a result of which the pressure in the chambers 6 and 9 jointly exceeds the force of the spring 12 and causes opening of the valve 4, whereby injection of the additional medium is carried out through the nozzle orifices 41 into the combustion chamber of the cylinder.

Thus the control unit 36 determines the timing and the duration of the injection of the additional medium. Especially with regard to the feeding of fuel through the valve 3, it can be noted that, when the additional medium is water, the valve 4 is opened prior to the valve 3, and after opening of the valve 3 the valve 4 remains open so that the two valves are concurrently open for a period of time. In the case where the additional medium is ammonium, urea or a water solution of these, feeding of the additional medium is started only after the valve 3 is opened. In this case the valve 4 is preferably closed only after the fuel injection through the valve 3 has stopped.

Closing of the valve 4 takes place under the influence of the control unit 36 so that the solenoid arrangement 34 releases the valve member 30, which, urged by the spring 33, is pressed into a position in which the valve surfaces 31 and 32 together prevent feeding of the hydraulic fluid from the passage 28 into the passage 11, whereby the hydraulic fluid is allowed into the passage 47 and the pressure in the chamber 9 decreases. As a result, the spring 12 urges the valve member 5 into its closed position.

In practice, and depending on the application, the feeding pressure for the additional medium may typically be from 250 to 600 bar. Even at is lowest pressure, the pressure must clearly exceed the pressure in the combustion chamber of the cylinder. An upper pressure limit depends on the spring force of the spring 12 closing the valve member 5 so that the spring 12 must be able to close the feeding valve 4 for the additional medium, when additionally taking account of the pressure of the hydraulic fluid in the chamber 9, which after closing of the control valve 27 may typically be about 20 bar. In addition, naturally, the area of the second piston surface 10 in the valve member 5 affects the matter. The pressures in the hydraulic fluid branches 23a and 23b are selected in accordance with the pressures in the feeding circuit for the additional medium so that the pressure in the sealing fluid branch 23a slightly exceeds this pressure, for instance by about 30 bar, and the pressure in the control fluid branch 23b is sufficient so that when fed into the chamber 9 it, together with the pressure of the additional medium in the chamber 6, exceeds the force of the spring 12 enabling opening of the valve 4 so as to provide injection of the additional fluid.

Instead of using hydraulic fluid, the control of the valve 4 may alternatively be based on a mechanical connection between the valve members 5 and 30 transmitting the control movements of the control valve 27 to the valve member 5.

## Claims

1. An injection arrangement for an internal combustion engine, especially a diesel engine, for injecting different pressure media directly into a cylinder of the engine, which arrangement includes a first valve (3) for controlling injection of fuel into the engine cylinder, a second valve (4) for controlling injection into the engine cylinder of an additional medium, said second valve (4) comprising a valve member (5) movable within a valve body (2) between open and closed positions, being urged towards its closed position by a spring force, and having a first piston surface (7), and a feed chamber (6) into which said additional medium is arranged to be fed continuously under pressure and from which said additional medium can be injected into the engine cylinder when the valve member (5) is in its open position, the pressure of the additional medium in the feed chamber (6) acting on said first piston surface (7) to urge the valve member (5) towards its open position but being insufficient by itself to move the valve member (5) to effect injection, characterised in that the arrangement further includes a control valve (27) controlled by an electric signal (35) and which, under the influence of the control signal (35), is arranged to effect, together with the pressure of the additional medium acting on the said first piston surface (7), movement of the valve member (5) into its open position for injection of the additional medium into the engine cylinder for decreasing the content of noxious substances resulting from combustion of the fuel in the engine cylinder.

2. An injection arrangement according to claim 1, characterised in that the control valve (27) is a solenoid valve, which receives the electric signal (35) from an electronic control unit (36) dependent on the operation of the engine and is programmed in advance, preferably so that the start and the duration of a feeding cycle occur by taking account of the load and the speed of rotation of the engine in each case.

3. An injection arrangement according to claim 2, characterised in that the valve member (5) has a second piston surface (10) and in that the solenoid valve (27) is arranged to control feeding of a hydraulic fluid into a second chamber (9), limited in part by said second piston surface (10), to urge the valve member (5) towards its open position.

4. An injection arrangement according to claim 3, characterised in that a circuit for the hydraulic fluid includes a branch pipe (23a) provided with a separate feed pump (24) and connected to a chamber (44) which is limited to a mantle surface of the valve member (5) located between the said first and second piston surfaces (7,10).

5. An injection arrangement according to any one of the preceding claims, characterised in that a feed circuit for the additional medium includes flow control means (20) arranged to detect changes in the flow pressure and, as a result thereof, when necessary, to act on the flow, for instance to cut off feeding of the additional medium into said first chamber (6), if the feeding into the cylinder exceeds set time limits.

6. An injection arrangement according to anyone of the preceding claims, characterised in that outlet means (39) of the first valve (3) are arranged at a different level to outlet means (41) of the second valve (4).

7. An injection arrangement according to any one of the preceding claims, characterised in that the first and second valves (3,4) are arranged within the same valve body (2).

8. A method making use of the injection arrangement according to any of the preceding claims and according to which fuel and an additional medium for decreasing the content of noxious substances resulting from fuel combustion are fed through separate valves into a cylinder of an internal combustion engine, characterised in that feeding of the additional medium into the said feed chamber (6) takes place under a pressure of at least 250 bar, preferably at least 400 bar, so that the resulting force effect on the valve member is less than said spring force acting on the valve member (5), in that the valve member (5) is moved into its open position to initiate the injection of the additional medium into the engine cylinder by feeding hydraulic fluid under pressure, preferably from 250 to 300 bar, into a hydraulic fluid chamber acting on the valve member, and in that feeding of the additional fluid occurs partly concurrently with feeding of the fuel and is stopped by cutting off the feeding of the hydraulic fluid into said hydraulic fluid chamber.

9. A method according to claim 8, characterised in that the additional medium is water and in that the feeding thereof is started before starting of the feeding of fuel and is stopped after feeding of the fuel is started.

10. A method according to claim 8, characterised in that the additional medium is ammonium, urea or a water solution of these and in that the feeding thereof is started after starting of the feeding of fuel, preferably after ignition of the actual fuel, and the feeding thereof is stopped only after feeding of the fuel is stopped.

## Patentansprüche

1. Einspritzeinrichtung für eine Brennkraftmaschine, insbesondere eine Dieselmaschine, zur direkten Einspritzung verschiedener Druckmedien in einen Zylinder der Maschine, welche Einrichtung ein erstes Ventil (3) zur Steuerung der Einspritzung des Brennstoffs in den Maschinenzylinder, ein zweites Ventil (4) zur Steuerung der Einspritzung eines Zusatzmediums in den Maschinenzylinder einschließt, dieses zweite Ventil (4) ein Ventilglied (5) aufweist, das innerhalb eines Ventilkörpers (2) zwischen einer geöffneter und einer geschlossenen Stellung beweglich ist, in seine geschlossene Stellung mittels einer Federkraft getrieben wird, und eine erste Kolbenoberfläche (7) hat, und eine Zufuhrkammer (6) besitzt, um in sie das Zusatzmedium kontinuierlich unter Druck einzuführen, und von der aus besagtes Zusatzmedium in den Maschinenzylinder eingespritzt werden kann, wenn das Ventilglied (5) in seiner geöffneten Stellung steht, der Druck des Zusatzmediums in der Zufuhrkammer (6) gegen die besagte erste Kolbenoberfläche (7) wirkt, um das Ventilglied (5) in seine geöffnete Stellung zu treiben, er aber nicht ausreicht, das Ventilglied (5) zu bewegen, eine Einspritzung zu bewirken, **dadurch gekennzeichnet**, daß die Einrichtung weiterhin ein Steuerventil (27) aufweist, das von einem elektrischen Signal (35) gesteuert wird, und das unter dem Einfluß des Steuersignals (35) so angeordnet ist, zusammen mit dem Druck des Zusatzmediums gegen besagte erste Kolbenoberfläche (7) die Bewegung des Ventilgliedes (5) in seine geöffnete Stellung, zur Einspritzung des Zusatzmediums in den Maschinenzylinder zu bewirken, so daß der Gehalt an giftigen (schädlichen) Substanzen, die aus der Verbrennung des Brennstoffs im Maschinenzylinder resultieren, vermindert wird.

2. Einspritzeinrichtung gemäß dem Anspruch 1, **dadurch gekennzeichnet**, daß das Steuerventil (27) ein Magnetventil ist, welches das elektrische Signal (35), abhängig vom Betriebszustand der Maschine, von einer elektronischen Steuereinheit (36) erhält, und vorweg vorzugsweise so programmiert ist, daß der Beginn und die Dauer eines Zufuhrzyklus' so sind, daß die Last und die Drehgeschwindigkeit der Maschine in jedem Stadium berücksichtigt sind.

3. Einspritzeinrichtung gemäß dem Anspruch 2, **dadurch gekennzeichnet**, daß das Ventilglied (5) eine zweite Kolbenoberfläche (10) hat und daß das Magnetventil (27) derart angeordnet ist, die Zufuhr einer Hydraulikflüssigkeit in eine zweite Kammer (9) zu kontrollieren, die teilweise begrenzt ist durch diese zweite Kolbenoberfläche (10), um das Ventilglied (5) in seine geöffnete Stellung zu treiben.

4. Einspritzeinrichtung gemäß dem Anspruch 3, **dadurch gekennzeichnet**, daß ein Kreis für die Hydraulikflüssigkeit ein Abzweigrohr (23a) mit einschließt, das mit einer separaten Zufuhrpumpe (24) ausgerüstet und an eine Kammer (44) angeschlossen ist, die durch eine Manteloberfläche des Ventilglieds (5) begrenzt ist, die zwischen besagter erster und zweiter Kolbenoberfläche (7,10) angeordnet ist.

5. Einspritzeinrichtung gemäß einem der vorangehenden Ansprüche, **dadurch gekennzeichnet**, daß ein Zufuhrkreis für das Zusatzmedium eine Durchflußmeßeinheit (20) aufweist, die angeordnet ist, um Änderungen des Durchflußdruckes festzustellen und um im Resultat daraus, falls notwendig, auf den Fluß einzuwirken, um beispielsweise die Zufuhr des Zusatzmediums in die besagte erste Kammer (6) zu unterbrechen, falls die Zufuhr in den Zylinder gesetzte zeitliche Grenzen überschreitet.

6. Einspritzeinrichtung gemäß einem der vorangehenden Ansprüche, **dadurch gekennzeichnet**, daß Auslaßmittel (39) des ersten Ventils (3) auf einem unterschiedlichen Höhenniveau zu Auslaßmitteln (41) des zweiten Ventils (4) angeordnet sind.

7. Einspritzeinrichtung gemäß einem der vorangehenden Ansprüche, **dadurch gekennzeichnet**, daß das erste und zweite Ventil (3, 4) im selben Ventilkörper (2) angeordnet sind.

8. Verfahren, das sich der Einspritzeinrichtung gemäß einem der vorangehenden Ansprüche bedient und gemäß dem Brennstoff und ein Zusatzmedium zur Verminderung des Gehaltes an giftigen (schädlichen) Substanzen, aus der Verbrennung des Brennstoffs resultierend, durch getrennte Ventile in einen Zylinder einer Brennkraftmaschine geführt werden, **dadurch gekennzeichnet**, daß die Zufuhr des Zusatzmediums in besagte Zufuhrkammer (6) unter einem Druck von mindestens 250 bar stattfindet, vorzugsweise mindestens 400 bar, so daß die resultierende Kraft, die auf das Ventilglied wirkt, kleiner ist, als die besagte Federkraft, die auf das Ventilglied (5) wirkt, so daß das Ventilglied (5) in seine geöffnete Stellung bewegt wird, um die Einspritzung des Zusatzmediums in den Maschinenzylinder auszulösen, indem Hydraulikflüssigkeit unter Druck, vorzugsweise 250 bis 300 bar, in einen auf das Ventilglied einwirkende hydraulische Flüssigkeitskammer geführt wird und daß die Zufuhr des Zusatzmediums teilweise gleichzeitig mit der Zufuhr des Brennstoffs erfolgt und durch Unterbrechung der Zufuhr der Hydraulikflüssigkeit in besagten Hydraulik-Flüssigkeitsbehälter angehalten wird.

9. Verfahren gemäß Anspruch 8, **dadurch gekennzeichnet**, daß das Zusatzmedium Wasser ist und daß dessen Zufuhr vor dem Beginn der Zufuhr des Brennstoffs gestartet und nach dem Start der Zufuhr des Brennstoffs angehalten wird.

10. Verfahren gemäß Anspruch 8, **dadurch gekennzeichnet**, daß das Zusatzmedium Ammonium, Harnstoff oder eine wäßrige Lösung dieser ist, und daß dessen Zufuhr nach dem Beginn der Zufuhr des Brennstoffs, vorzugsweise nach Zündung des eigentlichen Brennstoffs, gestartet und dessen Zufuhr erst nach Beendigung der Zufuhr des Brennstoffes angehalten wird.

## Revendications

1. Dispositif d'injection pour un moteur à combustion interne, en particulier un moteur diesel, pour l'injection de différents milieux de pression directement dans un cylindre du moteur, lequel dispositif comporte une première soupape (3) pour réguler l'injection de carburant dans le cylindre du moteur, une deuxième soupape (4) pour commander l'injection dans le cylindre du moteur d'un milieu supplémentaire, ladite deuxième soupape (4) comprenant un organe de soupape (5) déplaçable à l'intérieur d'un corps de soupape (2) entre des positions ouverte et fermée, étant poussée vers sa position fermée par une force de ressort, et ayant une première surface de piston (7), et une chambre d'alimentation (6) dans laquelle ledit milieu supplémentaire est prévu pour être alimenté en continu sous pression et depuis laquelle ledit milieu supplémentaire peut être injecté dans le cylindre du moteur lorsque l'organe de soupape (5) est dans sa position ouverte, la pression du milieu supplémentaire dans la chambre d'alimentation (6) agissant sur ladite première surface de piston (7) pour pousser l'organe de soupape (5) vers sa position ouverte mais étant insuffisante en soi pour déplacer l'organe de soupape (5) afin qu'il réalise l'injection, caractérisé en ce que le dispositif comporte en outre une soupape de régulation (27) commandée par un signal électrique (35) et qui, sous l'effet du signal de commande (35), est prévue pour effectuer, conjointement avec la pression du milieu supplémentaire agissant sur ladite première surface de piston (7), le déplacement de l'organe de soupape (5) dans sa position ouverte pour l'injection du milieu supplémentaire dans le cylindre du moteur, dans le but de diminuer la teneur en substances nocives résultant de la combustion du carburant dans le cylindre du moteur.

2. Dispositif d'injection selon la revendication 1, caractérisé en ce que la soupape de régulation (27) est une électrovanne, qui reçoit le signal électrique (35) d'une unité de commande électronique (36) dépendant du fonctionnement du moteur et est programmée à l'avance, de préférence de telle sorte que le démarrage et la durée d'un cycle d'alimentation se produise en tenant compte de la charge et de la vitesse de rotation du moteur dans chaque cas.

3. Dispositif d'injection selon la revendication 2, caractérisé en ce que l'organe de soupape (5) a une deuxième surface de piston (10) et en ce que l'électrovanne (27) est prévue pour réguler l'alimentation d'un fluide hydraulique à une deuxième chambre (9), limitée en partie par ladite deuxième surface de piston (10), afin de pousser l'organe de soupape (5) vers sa position ouverte.

4. Dispositif d'injection selon la revendication 3, caractérisé en ce qu'un circuit pour le fluide hydraulique comporte un tuyau de distribution (23a) pourvu d'une pompe d'alimentation séparée (24) et connecté à une chambre (44) qui est limitée à une surface d'enveloppe de l'organe de soupape (5) située entre lesdites première et deuxième surfaces de piston (7, 10).

5. Dispositif d'injection selon l'une quelconque des revendications précédentes, caractérisé en ce qu'un circuit d'alimentation pour le milieu supplémentaire comporte un moyen de régulation de l'écoulement (20) prévu pour détecter des modifications de pression d'écoulement et, par conséquent, lorsque cela est nécessaire, pour agir sur l'écoulement, par exemple pour interrompre l'alimentation du milieu supplémentaire dans ladite première chambre (6), si l'alimentation dans le cylindre dépasse des limites temporelles fixées.

6. Dispositif d'injection selon l'une quelconque des revendications précédentes, caractérisé en ce que des moyens de sortie (39) de la première soupape (3) sont prévus à un niveau différent des moyens de sortie (41) de la deuxième soupape (4).

7. Dispositif d'injection selon l'une quelconque des revendications précédentes, caractérisé en ce que les première et deuxième soupapes (3, 4) sont disposées à l'intérieur du même corps de soupape (2).

8. Procédé d'utilisation du dispositif d'injection selon l'une quelconque des revendications précédentes et selon lequel du carburant et un milieu supplémentaire destiné à réduire la teneur en substances nocives résultant de la combustion de carburant sont alimentés par des soupapes séparées dans un cylindre d'un moteur à combustion interne, caractérisé en ce que l'alimentation du milieu supplémentaire dans ladite chambre d'alimentation (6) a lieu sous une pression d'au moins 250 bars, de préférence d'au moins 400 bars, de sorte que l'effet de force résultant sur l'organe de soupape soit inférieur à ladite force de ressort agissant sur l'organe de soupape (5), en ce que l'organe de soupape (5) est déplacé dans sa position ouverte pour amorcer l'injection du milieu supplémentaire dans le cylindre du moteur en alimentant du fluide hydraulique sous pression, de préférence de 250 à 300 bars, dans une chambre de fluide hydraulique agissant sur l'organe de soupape, et en ce que l'alimentation du fluide supplémentaire a lieu partiellement simultanément avec l'alimentation du carburant et est interrompue en coupant l'alimentation du fluide hydraulique dans ladite chambre de fluide hydraulique.

9. Procédé selon la revendication 8, caractérisé en ce que le milieu supplémentaire est de l'eau et en ce que son alimentation est amorcée avant le début de l'alimentation de carburant et est arrêtée après le début de l'alimentation du carburant.

10. Procédé selon la revendication 8, caractérisé en ce que le milieu supplémentaire est de l'ammonium, de l'urée ou une solution aqueuse de ceux-ci, et en ce que l'alimentation de celui-ci est commencée après le début de l'alimentation de carburant, de préférence après l'allumage du carburant proprement dit, et son alimentation est arrêtée uniquement après que l'alimentation du carburant est arrêtée.
